# EUROPÄISCHE PATENTSCHRIFT

(11) **EP 1 703 273 B1**
(45) Veröffentlichungstag und Bekanntmachung des Hinweises auf die Patenterteilung: **12.02.2020**
(21) Anmeldenummer: 06111147.2
(22) Anmeldetag: 15.03.2006
(51) Int. Cl.: G01N 21/27, G02B 21/00, G01N 21/64

(54) **Multifunktionelle Kalibriereinrichtung und Kit sowie ihre Verwendungen zur Charakterisierung von Lumineszenzmesssystemen**
Multifunctional calibration device and kit and utilisation thereof for characterising luminescence measuring systems
Dispositif multifonctionnel de calibrage et ensemble, tout comme son utilisation destinée à la caractérisation de systèmes luminescents

(30) Priorität: 18.03.2005 DE 102005013229; 11.10.2005 DE 102005049364
(43) Veröffentlichungstag der Anmeldung: 20.09.2006
(73) Patentinhaber: BAM Bundesanstalt für Materialforschung und -prüfung, 12205 Berlin (DE)
(72) Erfinder: Resch-Genger, Ute, Berlin 12203 (DE); Hoffmann, Katrin, Berlin 12524 (DE); Nitschke, Roland, Gundelfingen 79194 (DE); Engel, Axel, Ingelheim 55218 (DE)
(74) Vertreter: Zimmermann & Partner Patentanwälte mbB

(56) Entgegenhaltungen:
- EP-A- 1 162 450
- WO-A-2004/065995
- DE-A1- 10 200 865
- US-A1- 2002 154 396
- US-A1- 2003 015 668
- US-A1- 2004 005 243
- US-A1- 2005 030 601
- US-B1- 6 355 919
- US-B1- 6 407 858

## Beschreibung

Die Erfindung betrifft eine multifunktionelle Kalibriereinrichtung zur Charakterisierung von Lumineszenzmesssystemen, insbesondere von spektral auflösenden, Weitfeld- und/oder konfokalen Imagingsystemen, ein Kit umfassend die multifunktionelle Kalibriereinrichtung sowie Verwendungen der Kalibriereinrichtung oder des Kits.

Photolumineszenzmessgeräte bestehen aus einem Anregungskanal, der u.a. eine Anregungslichtquelle und ein wellenlängenselektierendes optisches Bauelement enthält, und einem meist rechtwinklig zum Strahlengang des Anregungslichtes angeordneten Emissionskanal, mit dem das von dem im Probenraum befindlichen Chromophor nach Lichtabsorption emittierte Licht (Photolumineszenz) aufgezeichnet wird. Oftmals wird über einen Strahlteiler ein definierter Teil des Anregungslichtes in einen Referenzkanal eingekoppelt, der ein optisches Bauelement wie einen Spiegel oder einen Streuer und einen (Referenz-)Detektor enthält. Mit dem Referenzkanal wird die aktuelle Anregungslichtintensität bei der Anregungswellenlänge aufgezeichnet, um so kurzzeitige Schwankungen der Anregungslichtintensität zu erfassen.

Die Veröffentlichung US 2003/015668 A1 beschreibt Vorrichtungen, Verfahren und Werkzeuge zur quantifizierten Fluoreszenzmikroskopie. Die WO 2004/065995 A beschreibt Identifizierungskennzeichen und ein Fokussierungstarget. Die US 6 407 858 B1 beschreibt die Fokussierung von Mikroskopen und das Auslesen von Mikroarrays. US 2005/0030601 A1 offenbart ein System und Verfahren zur Instrumentkalibrierung mit einem Kalibrierstandard.

Jede Lumineszenzmesstechnik liefert Messdaten, die sich aus analyt- und gerätespezifischen Beiträgen zusammensetzen. Die nicht erwünschten gerätespezifischen Beiträge spiegeln die Wellenlängen- und Polarisationsabhängigkeit von Gerätekomponenten des verwendeten Messgerätes wieder. Verantwortlich für diese Abhängigkeiten sind insbesondere die im Anregungs- und Emissionskanal des Gerätes enthaltenen optischen Bauelemente, die Anregungslichtquelle und die eingesetzten Detektionssysteme. Die Vergleichbarkeit von Lumineszenzdaten über Geräte- und Laborgrenzen hinaus, die Erfassung der Gerätealterung, der Anspruch auf Rückführbarkeit von Lumineszenzdaten auf radiometrische Primärnormale (entsprechend der allgemeinen Forderung in EN ISO/IEC 17025) sowie viele quantitative Fluoreszenzaussagen, die Bestimmung von relativen Fluoreszenzquantenausbeuten und die Optimierung von Lumineszenzmethoden erfordern die Ermittlung dieser gerätespezifischen Beiträge. Dies gilt insbesondere für vergleichende Bewertungen von spektral gegeneinander verschobenen Lumineszenzprofilen oder für Emissionsmessungen bei verschiedenen Anregungswellenlängen.

Die Erfassung der oben genannten gerätespezifischen Beiträge zum Fluoreszenzsignal kann durch die Ermittlung so genannter Emissions- und Anregungskorrekturfunktionen erfolgen, welche die spektrale Empfindlichkeit der eingesetzten Detektionssysteme und die Wellenlängenabhängigkeit der spektralen Beleuchtungsstärke bzw. die Anregungslichtintensität am Probenort für den Emissions- und den Anregungskanal des jeweiligen Gerätes beschreiben. Darüber hinaus ist bei Fluoreszenzmesssystemen generell die Ermittlung der Linearität des/der Detektionssystems/e insbesondere für die Gerätekalibrierung und quantitative Fluoreszenzmessungen von Bedeutung, die Charakterisierung der Gerätelangzeitstabilität und der -performance ("day-to-day performance"), der Homogenität der Ausleuchtung und die Möglichkeit, Messdaten über Geräte- und Laborgrenzen hinaus miteinander zu vergleichen. Bei (konfokalen oder Weitfeld) spektral auflösenden bildgebenden Systemen (Imagingsystemen), die als Detektoren meist PMTs, seltener CCD-basierte Detektoren einsetzen, müssen darüber hinaus noch Geräteparameter wie die Homogenität der Ausleuchtung, die spektrale und die Ortsauflösung (x, y, z) ermittelt werden. Ein wichtiges Einsatzgebiet konfokaler Mikroskope mit spektral auflösenden Detektoren ist das pixelweise Entmischen von einander überlappenden Farbstoffemissionen in mehrfach fluoreszenzmarkierten Präparaten. Für die Überprüfung der Robustheit gegenüber Störeinflüssen, wie z.B. schlechten Signal/Rausch-Verhältnissen und Genauigkeit der Quantifizierung bei sehr unterschiedlichen Konzentrationen gibt es bisher keine Standardpräparate.

Bekannt ist der Einsatz zertifizierter physikalischer Transferstandards zur Erfassung der gerätespezifischen Effekte. Zur Kalibrierung des Anregungskanals kommen dabei typischerweise zertifizierte Empfängernormale zum Einsatz und für die Kalibrierung des Emissionskanals zertifizierte Standardlampen. Für den Einsatz physikalischer Transfernormale nachteilig sind die für die Anwendung notwendigen guten Optikkenntnisse des Anwenders, kostenintensive Rekalibrierungen, brenndauerabhängige Änderungen der spektralen Strahldichte von Standardlampen, und im Falle der Emissionskorrektur mit Standardlampen die unterschiedlichen Emissionscharakteristika von Lampe und Probe und die um mindestens mehr als drei Größenordnungen unterschiedlichen spektralen Strahldichten von Transfernormal und einer typischen lumineszierenden Probe. Für die Anregungskorrektur werden auch so genannte Quantenzähler eingesetzt. Dies sind hochkonzentrierte Farbstofflösungen, die einfallende Lichtquanten vollständig absorbieren und mit einer wellenlängenunabhängigen Fluoreszenzquantenausbeute emittieren. Quantenzähler liefern sehr konzentrations- und geometrieabhängige Messdaten und sind zudem anfällig für Polarisationseffekte. Standardisierte Kalibrierverfahren mit definierten Konzentrationen in Kombination mit definierten Messgeometrien sind für Quantenzähler nicht verfügbar.

Bekannt sind ebenfalls so genannte Fluoreszenzstandards, die typischerweise auf der Photolumineszenz einer chemischen Verbindung basieren. Spektrale Fluoreszenzstandards oder so genannte Emissions- und Anregungsstandards mit bekannten, (für gerätespezifische Effekte) korrigierten Emissions- bzw. Anregungsspektren können zur Ermittlung der spektralen Charakteristika von Photolumineszenzmesssystemen im Rahmen einer Gerätekalibrierung verwendet werden. Solche Fluoreszenzstandards werden in verschiedenen Formen eingesetzt, insbesondere in Form von Lösungen oder eingebettet in feste Polymer- oder Glasmatrizes. Vorteil von Fluoreszenzstandards ist, dass sich diese mit den zu untersuchenden lumineszierenden Proben hinsichtlich ihrer Lumineszenzintensität und Emissionscharakteristika stark ähneln. Fluoreszenzstandards erlauben somit die (spektrale) Kalibrierung unter den bei typischen Probenmessungen angewandten Bedingungen. Fluoreszenzstandards lassen sich in vielen verschiedenen Gerätetypen, Formaten und Messgeometrien vermessen und sind somit auch zur Kalibrierung von Fluoreszenzmesssystemen mit speziellen Probengeometrien oder -formaten geeignet, beispielsweise mit Mikroküvetten, Mikrotiterplatten oder Kryostatsystemen. Allein Fluoreszenzstandards erlauben die Durchführung der Kalibrierung in der selben Küvetten- und Messanordnung wie die eigentliche Probenmessung und liefern auf diese Weise optimale Kalibrierergebnisse. Voraussetzung für die Eignung eines Transferstandards ist die vollständige Charakterisierung aller applikationsrelevanten Eigenschaften inklusive der verwendeten Methode und der Angabe der Messunsicherheit und eine hinreichenden Langzeitstabilität im festen reinen Zustand und in Lösung bzw. eingebettet in einer Matrix.

In der Fachliteratur sind zahlreiche Empfehlungen zu Fluoreszenzstandards umfassend diskutiert, auch zu Emissions- und Anregungsstandards sowie zu Fluoreszenzquantenausbeutestandards (z.B. U. Resch-Genger et al., J. Fluoresc. 2005, 15(3), 315ff; U. Resch-Genger et al., J. Fluoresc. 2005, 15(3), 337ff. Chininsulfatdihydrat (SRM936) ist bislang jedoch der einzige Emissionsstandard, dessen korrigiertes Emissionsspektrum von einem Staatsinstitut, hier vom National Institut for Standards and Technology (NIST, USA), mit einem rückführbar charakterisierten Referenzfluormeter mit bekannter Messunsicherheit zertifiziert wurde (R.A. Velapoldi, K.D. Mielenz, NBS Spec. Publ. 1980, 260-264, PB 80132046, Springfield, VA). Allein zu diesem Standard sind Angaben zur Farbstoffreinheit, zur Kalibrierung des eingesetzten Spektrometers, zu den verwendeten Messparametern und zur Messunsicherheit verfügbar. Um ein Photolumineszenzmesssystem im gesamten UV/vis/NIR-Spektralbereich zu kalibrieren, ist somit die Kombination mehrerer hinsichtlich ihrer Fluoreszenzspektren aufeinander abgestimmter Chromophore erforderlich. Es gibt aber bislang nur sehr wenige Beispiele für Standardkombinationen. Bekannt ist beispielsweise eine Kombination von Emissionsstandards, die aus fluorophorhaltigen Polymerfolien mit NISTzertifizierten Emissionsspektren bestehen (A. Thompson, K. L. Eckerle, SPIE 1989, 1054, 20. J.W. Hofstraat & M.J. Latuhihin, Appl. Spectrosc. 1994, 48, 436). Weiterhin sind fluorophorhaltige Polymethylmethacrylat (PMMA)-Blöcke in Küvettenform als Emissions- und Anregungsstandards bekannt. Ein statistischer Ansatz zur Verknüpfung von Teilkorrekturfunktionen unterschiedlicher Farbstoffstandards zu einer Gesamtkorrekturfunktion unter Anwendung einer Zählratenstatistik (Poisson-Statistik) wird von J.A. Gardecki und M. Maroncelli (Appl. Spectrosc. 1998, 52 1179) beschrieben.

Einige Substanzen weisen zu geringe Photostabilitäten auf und bilden unter typischen Anregungs- und Messbedingungen Photoprodukte mit eigenen spektralen Beiträgen. Dies gilt besonders für ihre Anwendung in Geräten mit hohen Beleuchtungsstärken, insbesondere in Laser-basierten Messsystemen und für konfokale Fluoreszenzmikroskope. Die geringe thermische und photochemische Stabilität der meisten für makroskopische Anwendungen konzipierten Fluoreszenzstandards limitiert ihren Einsatz für Mikroskope. Viele eingesetzte Substanzen weisen eine zu große Fluoreszenzanisotropie auf, was eine zusätzliche Fehlerquelle bei der Kalibrierung bedeutet und die Verwendung von Polarisatoren erfordert. Im Allgemeinen sind die angegebenen Spektren nicht rückführbar, Angaben zur Messunsicherheit fehlen und nur in Ausnahmefällen (Chininsulfatdihydrat) sind die Spektren von einer autorisierten Stelle zertifiziert. Vielfach ist außerdem die Charakterisierung der anwendungsrelevanten spektroskopischen Eigenschaften unvollständig und Angaben zur Farbstoffreinheit fehlen in den meisten Fällen.

Neben dem ungedeckten Bedarf geeigneter Farbstoffstandards sowohl zur spektralen als auch zur quantitativen Kalibrierung vom Photolumineszenzmesssystemen bestehen im Falle konfokaler spektraler Imagingsysteme weitere Hindernisse bei der Gerätecharakterisierung. Insbesondere führen unterschiedliche Fokuseinstellungen verschiedener Anwender dazu, dass die Messung in unterschiedlichen Probentiefen erfolgt. Dies führt zu kaum reproduzierbaren und artefaktischen spektralen Einflüssen, die einerseits durch Wandeffekte des Gefäßes und andererseits durch innere Auslöscheffekte des Farbstoffs hervorgerufen werden. Aus US 6,635,487 B1 ist eine Vorrichtung zur Kalibrierung von Fluoreszenzmesssystemen mit mikrofluidischen Probenkammern bekannt, die Gebrauch von einem fluoreszierenden Festkörperstandard macht. Eine Fokussierung des Messstrahls erfolgt außerhalb der Probe mit einem Schlitz. US 2003/0030797 A beschreibt eine Vorrichtung zur Kalibrierung von Fluoreszenzlesegeräten für Mikrotiterplatten, die Einsätze von festen Fluoreszenzstandards in den Titerplattenkavitäten vorsieht. Die Einsätze bestehen beispielsweise aus einem optischen, idealerweise eigenfluoreszenzarmen Quarz- oder Glaskörper, der mit einem fluoreszierenden Material, wie Chininsulfat beschichtet ist. Eine Fokussierhilfe ist nicht vorgesehen.

Der Erfindung liegt daher die Aufgabe zugrunde, eine leicht bedienbare Vorrichtung zur umfassenden Charakterisierung von Lumineszenzmesssystemen, insbesondere von spektral auflösenden, konfokalen und/oder Weitfeld-Imagingsystemen, zur Verfügung zu stellen, welche eine flexible und reproduzierbare Charakterisierung einer Vielzahl von Geräteparametern erlaubt.

Diese Aufgabe wird durch eine Kalibriereinrichtung mit den Merkmalen des Anspruchs 1 gelöst.

Die in Anspruch 1 definierte zumindest eine integrierte Fokussierhilfe erlaubt eine verlässliche und für alle Nutzer identische Fokuseinstellung des Messstrahls (Anregungsstrahls) und damit die Vermessung praktisch identischer beleuchteter Messvolumina auf oder innerhalb der Kalibriermodule der Kalibriereinrichtung. Auf diese Weise wird gewährleistet, dass spektrale Einflüsse, die von unterschiedlichen Messtiefen verursacht werden, wie Wandeffekte oder innere Filtereffekte minimiert und standardisiert werden. Somit werden reproduzierbare und über Geräte- und Laborgrenzen hinaus vergleichbare und rückführbare Messdaten erhalten.

In bevorzugter Ausführung sind zumindest zwei in die Grundplatte integrierte Fokussiereinrichtungen (Fokussierhilfen) vorgesehen, die bevorzugt auf der Grundplatte verteilt, insbesondere an einander gegenüberliegenden Randbereichen der Grundplatte angeordnet sind. Dies ermöglicht eine Erfassung einer Planarität beziehungsweise einer Abweichung von dieser und eine entsprechende Kompensation durch rechnerische Interpolation auf die Messorte der Kalibriermodule.

Die Fokussiereinrichtung kann auf unterschiedliche Weise ausgeführt sein. Grundsätzlich weist sie eine hochebene Fokussierfläche auf, deren Rauheit weit unterhalb der optischen Auflösung des zu kalibrierenden Lumineszenzmesssystems liegt. Hierzu umfasst sie bevorzugt ein hochebenes Substrat, wie etwa einen Wafer aus einem Silizium-Einkristall oder dergleichen, auf dem eine sehr dünne Schicht eines reflektierenden und/oder fluoreszierenden Materials aufgesputtert ist. Hierfür eignet sich beispielsweise eine dünne Metallschicht (z.B. Chromschicht) mit einer Schichtdicke zwischen 10 und 100 nm, insbesondere zwischen 30 und 50 nm. Alternativ oder zusätzlich kann die Fokussierfläche lumineszierend, insbesondere fluoreszierend ausgebildet sein. Neben üblichen fluoreszierenden Materialien sind insbesondere fluoreszierende Quantumdots bevorzugt, die sich durch eine besonders hohe photothermische Stabilität auszeichnen. Besonders bevorzugt werden unterschiedliche fluoreszierende Materialien auf einem oder verschiedenen Wafern eingesetzt, deren unterschiedliche spektrale Eigenschaften typische Anregungs- oder Emissions-Spektralbereich des betreffenden Messsystems abdecken. Auf diese Weise erlaubt die Fokussiereinrichtung unter anderem eine Bestimmung der Parfokalität (hierunter versteht man ein über die Objektivabgleichlänge erzeugte identische Schärfeneinstellung) eines verwendeten Objektivs des Messsystems und einen parfokalen Bildabgleich mittels rechnerischer Methoden oder durch die Verwendung von Hilfslinsen im Mikroskop.

Gemäß der Erfindung Sind die Kalibriermodule lösbar auf der Grundplatte positionierbar, wobei diese in hierfür vorgesehene Aufnahmen der Grundplatte einlegbar sind. Dies ermöglicht eine sehr flexible Anpassung der Kalibriereinrichtung an unterschiedliche Gerätetypen, Messgeometrien oder Kalibrier- oder Charakterisierungsprobleme. So können etwa Einleger zur Bestimmung der spektralen Empfindlichkeit, der Linearität des Detektors, der Homogenität der Ausleuchtung, der tagesabhängigen Intensitätsperformance ("day-to-day performance"), der spektralen Auflösung und/oder der Ortsauflösung vorgesehen sein. Die Konstanz in x,y- und z-Richtung der Grundplatte und der Einleger wird vorzugsweise durch Verwendung von Materialien mit geringer Wärmeausdehnung für diese Elemente sichergestellt. Dazu eignen sich insbesondere Glas und Glaskeramikmaterialien, die einen linearen Wärmeausdehnungskoeffizient α kleiner 5x10⁻⁶ K⁻¹ bei Raumtemperatur aufweisen. Ebenfalls geeignet aber weniger bevorzugt sind Polymere mit Wärmeausdehnungskoeffizienten α von typischerweise kleiner als 5x10⁻⁶ K⁻¹.

Das Kalibriersystem wird hinsichtlich seiner Abmessungen (Größe der Grundplatte, Größe und Abstand der Kalibriermodule und Fokussiereinrichtungen) und seinem Material (Glas, Quarzglas, Kunststoff) sowie der Ausgestaltung und Positionierung der Fokussiereinrichtung(en) und Kalibriermodul(e) an das zu kalibrierende Lumineszenzmesssystem angepasst, beispielsweise an ein spektral auflösendes Weitfeld-Imagingsystem oder ein spektral auflösendes konfokales Fluoreszenzmikroskop. Für Applikationen im Zusammenhang mit Kalibrierungen von spektral auflösenden, konfokalen Fluoreszenzmikroskopen wird durch die Integration der Fokussierhilfen, etwa an beiden Seiten einer Kalibriereinrichtung mit typischen Dimensionen von Mikroskopobjektträgern erreicht, dass jeder Anwender nahezu das gleiche beleuchtete Volumen vermisst, was eine vergleichbare und reproduzierbare Gerätecharakterisierung und damit erhaltenen Messdaten unter applikationsrelevanten, also probenspezifischen Messbedingungen ermöglicht.

Die Erfindung betrifft ferner ein Kit, wie in Anspruch 17 definiert, das eine Grundplatte mit zumindest einer Fokussiereinrichtung gemäß der vorstehenden Beschreibung umfasst sowie ein Set unterschiedlicher Kalibriermodule mit verschiedenen Kalibrier- und/oder Charakterisierungsfunktionen. Das Kit versetzt einen Anwender in die Lage, die Kalibriereinrichtung entsprechend individuellen Erfordernissen auszugestalten. Das Kit kann selbstverständlich weitere Komponenten, wie etwa korrigierte (idealerweise zertifizierte) Fluoreszenzspektren von in den Kalibriermodulen enthaltenen Fluoreszenzstandards in digitaler Form oder eine Bedienungsanleitung enthalten.

Nachfolgend werden einige vorteilhafte Kalibriermodule der Kalibriereinrichtung beziehungsweise des Kits näher erläutert.

Gemäß einer bevorzugten Ausgestaltung der Erfindung umfasst die Kalibriereinrichtung zumindest ein Kalibriermodul zur Ermittlung der spektralen Empfindlichkeit, der Wellenlängengenauigkeit, der Linearität und/oder des Dynamikbereichs eines Detektionssystems, der "day-to-day performance" (Intensitätsstandard) und/oder zur Ermittlung der Ausleuchtungshomogenität der Lichtquelle des Lumineszenzmesssystems. Sämtliche dieser Funktionen werden können durch ein mindestens ein Fluorophor enthaltendes Material realisiert werden. Dabei wird der Begriff "Fluorophor" vorliegend weit gefasst verstanden und umfasst jegliche Substanzen (Atome, Ionen oder Verbindungen), die ein charakteristisches Fluoreszenzsignal nach entsprechender Anregung liefern. Dazu gehören neben den klassischen organischen fluoreszierenden Verbindungen auch die bereits im Rahmen der Fokussierflächen erwähnten Quantumdots oder andere fluoreszierende Nanokristalle sowie Ionen der Seltenerdmetalle und Übergangsmetalle. Vorzugsweise ist das Fluorophor in einer optisch transparentren Matrix enthalten, das heißt es handelt sich bei dem Kalibriermodul insbesondere um ein Fluorophor-dotiertes optisch transparentes Material, wie etwa ein Glas, eine Glaskeramik oder einen Kunststoff. Es ist darauf zu achten, dass eine hohe Homogenität der Verteilung des Fluorophors in der Matrix gegeben ist, damit bis zur maximalen Ortsauflösung des Messsystems ortsunabhängige Fluoreszenzspektren erhalten werden. Grundsätzlich lässt sich ein Fluorophor enthaltendes Modul in zeitaufgelösten Messungen auch als Fluoreszenzlebensdauerstandard einsetzen.

Nach einer besonders bevorzugten Ausgestaltung der Erfindung umfasst das zumindest eine Kalibriermodul zur Ermittlung der spektralen Empfindlichkeit, ein optisch transparentes Basismaterial aus einem Lanthan-Phosphat-Glas, einem Fluor-Phosphat-Glas, einem Fluor-Kronglas, einem Lanthanglas, einer aus diesen gebildeten Glaskeramik oder einer LithiumAluminiumsilikat-Glaskeramik. Dieses gläserne Basismaterial ist vorzugsweise mit mindestens einem Element, insbesondere einem Metallion dotiert, das ausgewählt ist aus der Gruppe der Seltenerdmetalle (umfassend Scandium, Yttrium, Lanthan sowie den Lanthanoiden), insbesondere den Lanthanoiden (umfassend die 14 Elemente der Ordnungszahl 58 bis 71). Von diesen sind bevorzugt Cer (Ce), Europium (Eu), Terbium (Tb), Thulium (Tm), Erbium (Er), Samarium (Sm). Vorzugsweise werden diese Elemente oder eine Mischung von diesen in Form von Oxiden gemäß M₂O₃ den Gläsern zugesetzt. Die genannten Seltenerdmetalle zeichnen sich durch stark strukturierte, schmalbandige Spektren aus. Nach einer weiteren bevorzugten Ausgestaltung sind die genannten Basismaterialien mit zumindest einem Metallion der Gruppe der Übergangsmetalle dotiert, wie etwa Kobalt (Co), Chrom (Cr) und Mangan (Mn) oder andere. Im Falle klassischer organischer Fluorophore wird eine Matrix eines organischen Polymers (Kunststoff) oder besonders Silicat bevorzugt. Für Quantumdots oder anderen fluoreszierenden Nanokristalle eigenen sich sowohl Gläser oder Glaskeramiken als auch Kunststoffe als transparentes Basismaterial.

Ein weiterer Funktionstyp von bevorzugt enthaltenen Kalibriermodulen betrifft Module zur Ermittlung der (absoluten) Anregungslichtintensität, die eine Standardisierung derselben erlauben. Hierfür werden beispielsweise Streuer eingesetzt, die einfallendes Licht diffus in alle Raumrichtungen reflektieren, oder ausbleichbare Fluorophore bekannter Ausbleichkinetik, beispielsweise eine mit einem solchen dotierte Glas- oder Kunststoffmatrix. Streuer, beispielsweise Milchglasobjekte, können darüber hinaus als Kalibriermodul zur Ermittlung der Unterdrückung der Anregungswellenlänge im Emissionskanal des Lumineszenzmesssystems dienen.

Ein gemäß der Erfindung in der Kalibriereinrichtung beziehungsweise dem Kit vorgesehenes Kalibriermodul ist ein Modul zur Bestimmung der Ortsauflösung in x,y- und/oder z-Richtung und/oder der Homogenität der Ausleuchtung. Für diese Funktionen ist eine reflektierende und/oder fluoreszierende Fläche, bevorzugt eine reflektierende oder fluoreszierende, schiefe Ebene eingesetzt werden. Alternativ oder zusätzlich kann als Kalibriermodul zur Bestimmung der Ortsauflösung in der Ebene und/oder der Tiefe eine dreidimensional-strukturierte Ebene, die bevorzugt eine fluoreszierenden Beschichtung aufweist, verwendet werden.

Die erfindungsgemäße Kalibriereinrichtung bzw. das Kit kann - in Abhängigkeit von der modularen Ausstattung - für eine Vielzahl von Kalibrierungs- und/oder Charakterisierungsapplikationen verwendet werden, insbesondere für die im Rahmen der Kalibriermodule genannten Funktionen.

Daneben kann die Kalibriereinrichtung bzw. das Kit aber auch als Fluoreszenzintensitätsstandard zur Bestimmung von relativen Fluoreszenzintensitäten im UV/vis/NIR-Spektralbereich verwendet werden, das heißt zur quantitativen Kalibrierung der Intensitäten. Darüber hinaus eignet sich die Kalibriereinrichtung zur Charakterisierung der Langzeitstabilität und von tagesabhängigen Performanceschwankungen hinsichtlich der Messintensitäten des Messsystems ("day-to-day instrument performance") und zum Vergleich von Lumineszenzmesssystemen. Weitere Anwendungsgebiete sind die Charakterisierung der Homogenität der Ausleuchtung bei verschiedenen Anregungs- und Emissionswellenlängen, die Verwendung als Fluoreszenzlebensdauerstandard, die Vergleichbarkeit von Lumineszenzdaten und -intensitäten, die Ermittlung der relativen spektralen Beleuchtungsstärke am Probenort sowie spektrales Unmixing von Chromophormischungen und die Überprüfung von für diese Zwecke eingesetzter Auswertungssoftware. Die Kalibriereinrichtung bzw. das Kit ist insbesondere geeignet, um die vorstehend genannten Anwendungen in einem typischen Applikationswellenlängenbereich von 200 bis 2500 nm, vorzugsweise im UV-vis-Bereich von 350 bis 850 nm, auszuführen.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:

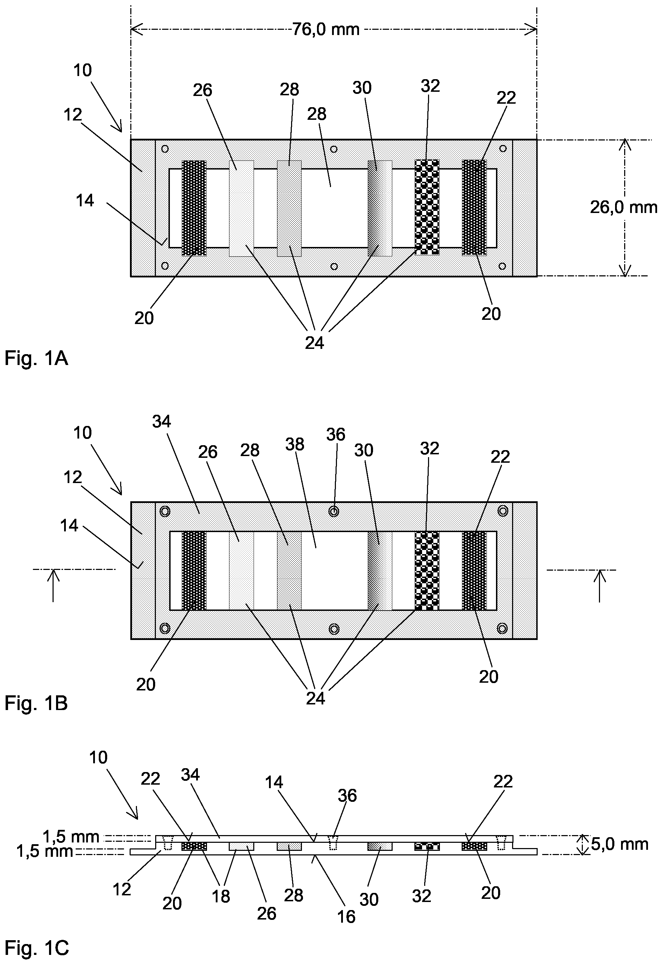

- Figur 1A: Aufsicht einer erfindungsgemäßen multifunktionellen Kalibriereinrichtung ohne Deckglas,
- Figur 1B: Aufsicht der erfindungsgemäßen Kalibriereinrichtung aus Figur 1A mit aufgelegtem Deckglas und
- Figur 1C: Längsschnitt der erfindungsgemäßen Kalibriereinrichtung gemäß der Schnittansicht in Figur 1B.

Figuren 1A bis 1C zeigen verschiedene Ansichten einer insgesamt mit 10 bezeichneten erfindungsgemäßen multifunktionellen Kalibriereinrichtung gemäß einer vorteilhaften Ausgestaltung der Erfindung zur Kalibrierung insbesondere eines konfokalen Fluoreszenzmikroskops. Die Kalibriereinrichtung 10 umfasst eine flächige Grundplatte 12 mit einer Oberseite 14 und einer Unterseite 16. Die Grundplatte 12 kann aus einem geeigneten Polymer, Glas oder Quarzglas bestehen und ein- oder mehrstückig, auch unter Verwendung unterschiedlicher Materialien hergestellt sein. Die Abmessungen der Grundplatte 12 betragen gemäß dem gezeigten Beispiel 76,0 mm X 26,0 mm und entsprechen damit Standardabmessungen von Objektträgern für Mikroskope.

Auf der Oberseite 14 der Grundplatte 12 ist eine Mehrzahl von hier sechs Aufnahmen 18 in Form rechteckiger Materialausnehmungen vorgesehen (Figur 1C). In den äußeren zwei Aufnahmen 18, also auf einander gegenüberliegenden Randbereichen der Grundplatte 12 ist jeweils eine Fokussiereinrichtung 20 angeordnet. Abweichend von der dargestellten Ausführung können auch mehr als zwei Fokussiereinrichtungen 20 auf der Grundplatte 12 verteilt vorgesehen sein oder nur eine. Im Falle von nur einer Fokussiereinrichtung 20 ist diese vorteilhaft im mittleren Bereich der Grundplatte 12 angeordnet. Die Fokussiereinrichtungen 20 weisen jeweils eine hier obenliegende Fokussierfläche 22 auf.

Im dargestellten Beispiel sind die Fokussiereinrichtungen 20 als hochebene Wafer aus Siliziumeinkristallen ausgestaltet, die jeweils eine reflektierende Fokussierfläche 22 aufweisen. Die Fokussierfläche 22 besteht aus einer dünnen, auf den als Substrat dienenden Wafer gesputterten Schicht aus Chrom mit einer Schichtdicke von 40 nm. Die Rauheit der Fokussierfläche 22 liegt sehr weit unterhalb der optischen Auflösung des zu kalibrierenden Lumineszenzmikroskops. Andere Wafer-Materialien oder reflektierende Metallschichten sind ebenfalls denkbar. Alternativ können die Fokussiereinrichtungen 20 auch hochebene, lumineszierende Fokussierflächen 22 aufweisen. Diese sind etwa als sehr dünne Schichten von fluoreszierenden, aus wenigen hundert bis wenigen tausend Atomen bestehenden Halbleiter-Nanopartikeln, so genannten Quantumdots, ausgestaltet, die wiederum auf einen Si-Wafer oder dergleichen etwa mittels Spin-Sputtering aufgebracht sind. Bekannte fluoreszierende Materialien für Quantumdots sind beispielsweise Cadmium-Selenide, Cadmium-Telluride, Indium-Phsphor, Blei-Selenide und andere. Gegebenenfalls können die Quantumdots noch mit einer Hülle beschichtet sein. Quantumdots haben gegenüber herkömmlichen fluoreszierenden Materialien den Vorteil sehr stabil zu sein, insbesondere nicht auszubleichen. Die Schichtdicke der fluoreszierenden Fokussierfläche 22 entspricht vorzugsweise einem Monolayer aus Quantumdots und liegt damit beispielsweise in der Größenordnung von 7 bis 10 nm. Bei anderen fluoreszierenden oder reflektierenden Substanzen beträgt sie vorzugsweise nur wenige Atom- bzw. Molekülschichten des betreffenden Materials, besonders bevorzugt ist sie einatomig ausgestaltet.

In den übrigen Aufnahmen 18 sind verschiedene Kalibriermodule 24 eingelegt, die jeweils zumindest eine Kalibrierfunktion und/oder eine Funktion zur Charakterisierung des Lumineszenzmesssystems aufweisen. In Figur 1C ist erkennbar, dass die Fokussierflächen 22 der Fokussiereinrichtungen 20 in einer Ebene mit den Oberflächen der Kalibriermodule 24 angeordnet sind. Die Kalibriermodule 24 und die Fokussiereinrichtungen 20 sind ferner in einem definierten Abstand, äquidistant zueinander angeordnet. In bevorzugter Ausgestaltung sind die Kalibriermodule 24 als Einleger lose in die Aufnahmen 18 eingelegt. Dies ermöglicht ein einfaches Austauschen der Module 24, um die Kalibriereinrichtung 10 für verschiedene Anwendungen auszustatten. Auf diese Weise kann die Ausstattung an unterschiedlichste Kalibrierprobleme und Charakterisierungsfragen adaptiert werden, etwa die Bestimmung der spektralen Empfindlichkeit des Messsystems, Bestimmung der Linearität oder des Dynamikbereichs des verwendeten Detektorsystems, Bestimmung der spektralen Auflösung oder der Ortsauflösung, Bestimmung der Ausleuchtungshomogenität etc. Zudem kann die modulare Ausstattung der Kalibriereinrichtung 10 sowie auch ihr Format, ihre Abmessungen und die Distanz der Module 24 an unterschiedliche Messsysteme und -geometrien ausgerichtet werden, beispielsweise an konfokale, spektral auflösende Imagingsysteme, wie etwa konfokale Fluoreszenzmikroskope und Mikroarray-Scanner, sowie wide-field Fluoreszenzmikroskope, Ramanspektrometer und Ramanmikroskope. Durch die Wahl der Einlegermodule 24 und Kombinationen von diesen ist eine weite und flexible Problemanpassung möglich, etwa an gerätespezifische Anregungswellenlängen und detektierbare Emissionsbereiche, sowie eine Variation der Signalgröße beziehungsweise Fluoreszenzintensität oder von Intensitätsverhältnissen. Einige bevorzugte Kalibriermodule 26, 28, 30, 32 sind weiter unten im Einzelnen erläutert. Die erfindungsgemäße Kalibriereinrichtung 10 ist einfach zu handhaben und auf die Benutzung durch technisches Personal zugeschnitten.

Wie in den Figuren 1B und 1C dargestellt ist, kann die Grundplatte 12 mit den Fokussiereinrichtungen 20 und den Kalibriermodulen 24 ganz oder teilweise auch mit einem transparenten Deckglas 34 abgedeckt sein, welches beispielsweise über Schraubverbindungen 36 mit der Grundplatte 12 verbunden ist. Auf diese Weise können auch Deckglas-korrigierte und/oder Immersionsmedien verwendet werden. In der dargestellten Ausführung weisen sowohl die Grundplatte 12 (Figur 1A) als auch das Deckglas 34 ein Sichtfenster 38 auf. Der übrige, hier grau dargestellte Bereich ist beispielsweise durch eine Lackschicht oder dergleichen ausgeblendet.

Als ein erster Typ von Kalibriermodulen 24 sind die Module 26 und 28 vorgesehen, bei denen es sich jeweils um ein optisch transparentes Material (etwa ein Glas, eine Glaskeramik oder einen transparenten Kunststoff) handelt, die mit einem Fluorophor volumendotiert sind. Die für die nachstehend genannten Anwendungen geeigneten Fluorophore sollten mit anwendungsrelevanten Lichtquellen anregbar sein, sich durch die unten genannten spektroskopischen Eigenschaften auszeichnen, eine ausreichende Lumineszenzquantenausbeute sowie eine möglichst geringe Anisotropie der Fluoreszenz aufweisen, eine ausreichende Homogenität der Chromophorenverteilung sowie eine hohe thermische und photochemische Stabilität unter anwendungsrelevanten Bedingungen aufweisen.

Gemäß einer vorteilhaften Ausgestaltung der Erfindung ist das Kalibriermodul 26 ein mit einem Metallion der Gruppe der Seltenerdmetalle, insbesondere der Lanthanoiden, oder eine Mischung von diesen, dotiertes optisch transparentes Material. Im vorliegenden Beispiel ist das Kalibriermodul 26 ein Lanthan-Glas (z.B. 9% Al₂O₃, 70% P₂O₅, 8% K₂O, 13% La₂O₃), das mit insgesamt 1 bis 6% mindestens eines Lanthanoidoxids, insbesondere Ce₂O₃, Eu₂O₃, Tb₂O₃, Tm₂O₃ einfach oder mehrfachdotiert ist. Aufgrund der schmalbandigen, stark strukturierten Spektren der Lanthanoide eignet sich das Kalibriermodul 26 besonders zur Ermittlung der spektralen Auflösung, wobei überprüft wird, ob zwei spektral eng benachbarte Banden noch aufgelöst erscheinen. Zudem kann die Wellenlängengenauigkeit des Messsystems über den Vergleich der bekannten Bandenlagen mit den gemessenen überprüft werden. Das Kalibriermodul 26 dient jedoch auch der Ermittlung der spektralen Empfindlichkeit (spektrale Sensitivität), das heißt der Kombination aus Wellenlängen- und Intensitätsgenauigkeit in Abhängigkeit der Wellenlänge, durch den Vergleich von Intensitätsverhältnissen ausgewählter Emissionsbanden.

Das ebenfalls fluorophor-dotierte Kalibriermodul 28 hingegen ist bevorzugt mit einem Übergangsmetallion dotiert. Beispielsweise handelt es sich um ein mit 0,1 bis 0,01% Cr₂O₃ dotiertes Lanthan-Phosphat-Glas (s.o.) oder ein mit 1 bis 15% ZnO dotiertes Lanthanglas (30-60% La₂O₃, 30-50% B₂O₃, 1-5% SiO₂, 2-10% CaO). Aufgrund der breitbandigen, schwach strukturierten Spektren eignet sich das Übergangsmetall-dotierte Kalibriermodul 28 besonders vorteilhaft zur Ermittlung der spektralen Empfindlichkeit (Sensitivität) des Detektionssystems über einen weiten Spektralbereich.

Beide Kalibriermodule 26, 28 können besonders bevorzugt auch zur Überprüfung der Homogenität der Ausleuchtung herangezogen werden. Hierfür wird die betrachtete Messfläche in x,y-Dimension hinsichtlich der Intensität an ausgewählten Wellenlängen überprüft, das heißt ob etwa im Zentrum der beleuchteten Fläche die gleiche Intensität gemessen wird wie an den Randbereichen. Die Ermittlung der Ausleuchtungshomogenität ist bei allen ortsaufgelösten bildgebenden Verfahren äußerst wichtig, um Intensitätsunterschiede an verschiedenen Bildpositionen korrekt zu deuten und zu berücksichtigen. Die Kalibriermodule 26, 28 können ferner zur Charakterisierung der Langzeitstabilität, der Validierung der Performance, zum Vergleich verschiedener Geräte verwendet werden. Beide ermöglichen auch Aussagen zum Einfluss von Geräteparametern auf die generierten Fluoreszenzsignale, beispielsweise der Pinholegröße (bei konfokalen Imagingsystemen und Fluoreszenzmikroskopen) oder der PMT-Spannung (bei konfokalen Imagingsystemen, Fluoreszenzmikroskopen und Mikroarray-Auslesegeräten). Gemäß einer - nicht dargestellten - Ausgestaltung ist eine Reihe von Kalibriermodulen vorgesehen, die mit unterschiedlichen Konzentrationen desselben Fluorophors dotiert sind. Eine solche Konzentrationsreihe ermöglicht die Bestimmung der Linearität des Detektorsystems des Emissionskanals, das heißt des Intensitätsbereichs, bei dem das Detektorsignal linear mit der eingestrahlten Intensität zunimmt, das heißt in dem eine zuverlässige quantitative Aussage über eine Konzentration eines Chromophors in der Probe möglich ist. Auch kann mithilfe der Konzentrationsreihe der Dynamikbereich des Detektorsystems ermittelt werden, also die kleinste und die größte noch detektierbare Lichtmenge. Ebenfalls kann damit der Detektor-Response bei Veränderung der Verstärkung ermittelt werden.

Bei dem erfindungsgemäßen Kalibriermodul 30 handelt es sich um einen Einleger, der eine schiefe, das heißt relativ zur Grundplatte 12 geneigte Ebene aufweist, die entweder reflektierend (als Spiegel) oder fluoreszierend ausgestaltet ist. Als reflektierende und fluoreszierende Schichten kommen grundsätzlich die für die Fokussierflächen 22 genannten Materialien in Frage. Das Kalibriermodul 30 mit schiefer Ebene gestattet die Messung der Ortsauflösung in die z-Dimension, indem - bei bekannter Neigung der Ebene - der Messstrahl eine definierte Schrittweite in x,y-Dimension unter konstanter Fokussierung (z-Dimension) verstellt und die Änderung des Reflexions- beziehungsweise Fluoreszenzsignals beobachtet wird. In analoger Weise kann auch die Ortsauflösung in x,y-Richtung ermittelt werden. Alternativ, aber nicht beansprucht, kann die Ortsauflösung in die z-Dimension auch mit einer einfachen (nicht geneigten) reflektierende oder fluoreszierende Ebene im Reflektionsmodus mittels eines z-Scans ermittelt werden. Auch kann eine solche spiegelnde oder fluoreszierende Fläche zur Ermittlung der Ausleuchtungshomogenität verwendet werden.

Als viertes Kalibriermodul 32 ist im dargestellten Beispiel ein Objekt mit einer dreidimensional strukturierten Oberfläche vorgesehen, die wiederum mit einer fluoreszierenden oder reflektierenden Schicht beschichtet ist. Auch ein solches Objekt kann zur Ermittlung der Ortsauflösung in x,y- und/oder in z-Richtung eingesetzt werden. Weist beispielsweise die Oberfläche ein Sägezahnprofil mit einer Zahnhöhe von 1 µm auf, so kann das am höchsten Punkt gemessene Signal dem am tiefsten Punkt gemessenen Signal verglichen werden. Weichen beide Signale voneinander ab, ist die z-Auflösung mindestens 1 µm oder besser.

Für die vorstehend beschriebenen Module 24, insbesondere die zur Ermittlung der Ortsauflösung in x,y- und/oder z-Richtung eines Photolumineszenzmesssystems bestimmten, sowie für die Grundplatte 12 werden bevorzugt Materialien mit sehr geringen Wärmeausdehnungskoeffizienten eingesetzt, insbesondere Glas und Glaskeramikmaterialien, die einen linearen Wärmeausdehnungskoeffizient α kleiner 5x10⁻⁶ K⁻¹ bei Raumtemperatur aufweisen. Dies ermöglicht die zuverlässige Verifizierung der gemessenen Ortsauflösung. Ein weiteres - hier nicht dargestelltes - Modul kann der Ermittlung der Anregungslichtintensität dienen. Zu diesem Zweck kann beispielsweise ein mit einem ausbleichbaren Fluorophor mit bekannter, intensitätsabhängiger Ausbleichkinetik dotierter Polymerfilm herangezogen werden. Wird dieser mit der zu charakterisierenden Strahlungsquelle beleuchtet und die Ausbleichkinetik gemessen, so kann hieraus auf die eingestrahlte Lichtintensität geschlossen werden. Vorzugsweise ist der mit dem ausbleichbaren Fluorophor dotierte Polymerfilm mit einem x,y-Koordinatenmatrix versehen, die der definierten Lokalisation des Anregungslicht auf dem Objekt ermöglicht. Noch bevorzugter wird zum Zweck der Anregungslichtbestimmung ein Streuer, beispielsweise ein Milchglasobjekt eingesetzt, der das einfallende Licht diffus in alle Raumrichtungen reflektiert und somit einen geringen Anteil auch auf den Detektor lenkt. Bei Kenntnis des prozentualen Streugrades des Streuers erlaubt die Messung der im Detektor gemessenen Intensität wiederum den Rückschluss auf die eingestrahlte Anregungslichtintensität. Die Ermittlung der absoluten Anregungslichtintensität erlaubt etwa die Standardisierung der Anregung über Geräte und Laborgrenzen hinaus. Das Milchglasobjekt (Streuer) kann ferner verwendet werden, um die Qualität der Unterdrückung der Anregungswellenlänge im Emissionskanal festzustellen, insbesondere bei konfokalen spektral auflösenden Imagingsystemen. Dies erfolgt, indem das selbst nicht fluoreszierende Objekt mit der betreffenden Anregungswellenlänge beleuchtet und mit dem Detektionssystem die Menge des in den Emissionskanal gestreuten und nicht durch die dort vorgesehenen Filter unterdrückten Anregungslichts erfasst wird. Dabei werden vorzugsweise die bei typischen Fluoreszenzanwendungen notwendigen Anregungslichtintensitäten und die PMT-Sensitivität beziehungsweise Kamerabelichtungszeit eingestellt.

Zur Fokussierung des Fluoreszenzmikroskops mittels der erfindungsgemäß vorgesehenen Fokussiereinrichtungen 20 wird folgendermaßen vorgegangen. Zunächst wird die Kalibriereinrichtung 10 auf einen Objekttisch des Fluoreszenzmikroskops positioniert. Dann wird der Messstrahl (Anregungsstrahl) des Geräts mittels des in drei Dimensionen motorisch verstellbaren Objekttisches in x,y-Richtung auf eine der Fokussiereinrichtungen 20 gefahren. (Alternativ kann je nach Ausführung des Mikroskops auch der Anregungsstrahl durch eine verstellbare Optik des Geräts bei festem Objekttisch auf den gewünschten Messort gefahren werden.) Dort erfolgt eine Fokussierung des Strahls in z-Richtung exakt auf die Fokussierfläche 22 der Fokussiereinrichtung 20, indem der Objekttisch motorisch in z-Richtung bewegt wird (beziehungsweise die Optik des Mikroskops entsprechend verstellt wird). Es wird die Position ermittelt, bei der das maximale Reflexionssignal (bzw. Fluoreszenzsignal im Falle einer fluoreszierenden Fokussierfläche 22) detektiert wird. Dieser Vorgang kann vollständig automatisiert erfolgen. Die gefundene Fokuseinstellung wird als z-Koordinate gespeichert, beziehungsweise als Frontabstand zwischen dem Präparat (Fokussierfläche 22) und der Frontlinse der Optik. Sind mehrere Fokussiereinrichtungen 20 vorhanden, wird mit den weiteren Fokussiereinrichtungen 20 ebenso verfahren. Werden für die unterschiedlichen Fokussiereinrichtungen 20 unterschiedliche Fokuseinstellung (z-Koordinaten bzw. Frontabstände) gefunden, bedeutet dies, dass die Grundplatte 12 nicht vollkommen plan ist. In diesem Fall werden die z-Koordinaten für die x,y-Positionen der zwischen den Fokussiereinrichtungen 20 angeordneten Kalibriermodule 24 rechnerisch interpoliert. Anschließend wird der Messstrahl nacheinander auf die entsprechenden Kalibriermodule 24 gefahren und auf die entsprechende gespeicherte beziehungsweise interpolierte z-Koordinate fokussiert. Soll die Messung genau auf der Oberfläche des betreffenden Kalibriermoduls 24 erfolgen, beispielsweise im Falle eines Spiegels, entspricht die erforderliche Fokuseinstellung der an der Fokussierfläche 22 ermittelten. Soll aber - wie im Falle eines Milchglasobjektes oder den Fluorophor-dotierten Glasmodulen 16, 28 ein Volumen in einer definierten Tiefe vermessen werden, beispielsweise in 30 µm Tiefe, so wird der Fokus der Optik gegenüber der für das betreffende Kalibriermodul ermittelte Null-Fokuseinstellung um diese Tiefe verstellt. Die Fokusermittlung mittels der Fokussiereinrichtungen 20 dient somit als Referenzwert für die jeweiligen Oberflächen der Kalibriermodul 24. Durch die integrierten Fokussiereinrichtungen 20 wird erreicht, dass in jedem Kalibriermodul 24 der Kalibriereinrichtung 10, insbesondere in transparenten, Fluorophor-dotierten oder streuenden Modulen, das gleiche Probenvolumen vermessen wird. Insbesondere kann dies auf diese Weise auch über Geräte- und Laborgrenzen hinaus gewährleistet werden, so dass spektrale Einflüsse, die durch unterschiedliche Messtiefen in den Modulen 24 verursacht werden, beispielsweise Wand- und innere Filtereffekte, standardisiert werden und somit vergleichbare und rückführbare Mess- und Kalibrierergebnisse erzielt werden.

### BEZUGSZEICHENLISTE

- 10: Kalibriereinrichtung
- 12: Grundplatte
- 14: Oberseite
- 16: Unterseite
- 18: Aufnahme
- 20: Fokussiereinrichtung
- 22: Fokussierfläche
- 24: Kalibriermodul
- 26: Seltenerdenmetall-dotiertes Kalibriermodul
- 28: Übergangsmetall-dotiertes Kalibriermodul
- 30: Kalibriermodul mit schiefer, reflektierender oder fluoreszierender Ebene
- 32: dreidimensional strukturiertes Kalibriermodul
- 34: Deckglas
- 36: Schraubverbindung
- 38: Sichtfenster

## Patentansprüche

1. Multifunktionelle Kalibriereinrichtung (10) zur Charakterisierung von Lumineszenzmesssystemen, insbesondere von spektral auflösenden, Weitfeld- und/oder konfokalen Imagingsystemen, umfassend
(a) eine Grundplatte (12),
(b) zumindest ein auf der Grundplatte (12) angeordnetes, zumindest eine Kalibrier- und/oder Charakterisierungsfunktion aufweisendes Kalibriermodul (24) sowie
(c) zumindest eine auf der Grundplatte (12) angeordnete Fokussiereinrichtung (20) mit einer hochebenen, reflektierenden und/oder lumineszierenden Fokussierfläche (22) zur Einstellung eines definierten Messstrahlfokus des zu kalibrierenden Lumineszenzmesssystems, wobei die Fokussierfläche (22) in einer Ebene mit einer Oberfläche des mindestens einen Kalibriermoduls (24) angeordnet ist und eine Rauheit unterhalb der optischen Auflösung des zu kalibrierenden Lumineszenzmesssystems aufweist, und
**(d)** ein Kalibriermodul (30) zur Bestimmung der Ortsauflösung in x-, y- und z-Richtung umfassend eine reflektierende und/oder fluoreszierende schiefe Ebene,
wobei die Grundplatte (12) Aufnahmen (18) für das zumindest eine, die Kalibrier- und/oder Charakterisierungsfunktion aufweisende, Kalibriermodul (24) und das Kalibriermodul (30) zur Bestimmung der Ortsauflösung in x-, y- und z-Richtung umfasst, sodass die multifunktionelle Kalibriereinrichtung (10) individuellen Erfordernissen entsprechend gestaltbar ist.

2. Kalibriereinrichtung (10) nach Anspruch 1,
**dadurch gekennzeichnet, dass**
zumindest zwei auf der Grundplatte (12) angeordnete Fokussiereinrichtungen (20) vorgesehen sind, die insbesondere an einander gegenüberliegenden Randbereichen der Grundplatte (12) angeordnet sind.

3. Kalibriereinrichtung (10) nach Anspruch 1 oder 2,
**dadurch gekennzeichnet, dass**
die zumindest eine Fokussiereinrichtung (20) ein mit einer reflektierenden Metallschicht beschichtetes Substrat, insbesondere ein Chrom-besputterter Silizium-Wafer ist.

4. Kalibriereinrichtung (10) nach einem der vorhergehenden Ansprüche,
**dadurch gekennzeichnet dass**
die Kalibriereinrichtung (10) zumindest eine weitere, auf der Grundplatte (12) angeordnete Fokussiereinrichtung (20) aufweist mit einer hochebenen, lumineszierenden Fokussierfläche (22) zur Einstellung eines definierten Messstrahlfokus des zu kalibrierenden Lumineszenzmesssystems, welche in einer Ebene mit dem mindestens einen Kalibriermodul (24) angeordnet ist und eine Rauheit unterhalb der optischen Auflösung des zu kalibrierenden Lumineszenzmesssystems aufweist.

5. Kalibriereinrichtung (10) nach einem der vorhergehenden Anspruch 4,
**dadurch gekennzeichnet, dass**
die zumindest eine weitere Fokussiereinrichtung (20) ein mit einem lumineszierenden Material beschichtetes Substrat, insbesondere ein mit einem fluoreszierenden Material, bevorzugt mit Quantumdots besputterter Wafer ist.

6. Kalibriereinrichtung (10) nach einem der vorhergehenden Ansprüche,
**dadurch gekennzeichnet, dass**
das zumindest eine Kalibriermodul (24) lösbar mit der Grundplatte (12) verbindbar ist, insbesondere lösbar in eine Aufnahme (18) der Grundplatte (12) einlegbar ist.

7. Kalibriereinrichtung (10) nach einem der vorhergehenden Ansprüche,
**dadurch gekennzeichnet, dass**
eine Mehrzahl von auf der Grundplatte (12) angeordneten Kalibriermodulen (24) unterschiedlicher Funktion vorgesehen ist.

8. Kalibriereinrichtung (10) nach einem der vorhergehenden Ansprüche,
**dadurch gekennzeichnet, dass**
das zumindest eine Kalibriermodul (24) ein Modul zur Ermittlung der spektralen Empfindlichkeit, der Wellenlängengenauigkeit, der Linearität und/oder des Dynamikbereichs eines Detektionssystems und/oder zur Ermittlung der Ausleuchtungshomogenität der Lichtquelle des Lumineszenzmesssystems umfasst.

9. Kalibriereinrichtung (10) nach Anspruch 8,
**dadurch gekennzeichnet, dass**
das zumindest eine Kalibriermodul (24) ein mindestens ein Fluorophor enthaltendes Material, insbesondere ein Fluorophor-dotiertes optisch transparentes Material ist.

10. Kalibriereinrichtung (10) nach einem der Ansprüche 8 oder 9,
**dadurch gekennzeichnet, dass**
mindestens ein Fluorophor mindestens ein Metallion ist, ausgewählt aus der Gruppe der Seltenerdmetalle, insbesondere der Lanthanoiden, oder eine Mischung von diesen.

11. Kalibriereinrichtung (10) nach einem der Ansprüche 8 bis 10,
**dadurch gekennzeichnet, dass**
das mindestens eine Fluorophor mindestens ein Metallion ist, ausgewählt aus der Gruppe der Übergangsmetalle, insbesondere Kobalt, Chrom und Mangan.

12. Kalibriereinrichtung (10) nach einem der Ansprüche 8 bis 10,
**dadurch gekennzeichnet, dass**
das Fluorophor ausgewählt ist aus der Gruppe der fluoreszierenden organischen Verbindungen, der Quantumdots oder der fluoreszierenden Nanokristalle.

13. Kalibriereinrichtung (10) nach einem der Ansprüche 9 bis 12,
**dadurch gekennzeichnet, dass**
das optisch transparente Material ein Glas, eine Glaskeramik oder ein Kunststoff ist, insbesondere ein Lanthan-Phosphat-Glas, ein Fluor-Phosphat-Glas, ein Fluor-Kronglas, ein Lanthanglas, eine aus diesen gebildete Glaskeramik oder eine Lithium-Aluminiumsilikat-Glaskeramik ist.

14. Kalibriereinrichtung (10) nach einem der vorhergehenden Ansprüche,
**dadurch gekennzeichnet, dass**
das zumindest eine Kalibriermodul (24) ein Modul zur Ermittlung der Anregungslichtintensität umfasst, insbesondere einen Streuer oder eine mit einem ausbleichbaren Fluorophor bekannter Ausbleichkinetik dotierte Glas- oder Kunststoffmatrix.

15. Kalibriereinrichtung (10) nach einem der vorhergehenden Ansprüche,
**dadurch gekennzeichnet, dass**
das zumindest eine Kalibriermodul (24) ein Modul zur Ermittlung der Unterdrückung der Anregungswellenlänge im Emissionskanal des Lumineszenzmesssystems umfasst, insbesondere einen Streuer.

16. Kalibriereinrichtung (10) nach einem der vorhergehenden Ansprüche,
**dadurch gekennzeichnet, dass**
das zumindest eine Kalibriermodul (24) ein Modul zur Ermittlung der Ortsauflösung in x,y- und/oder in z-Richtung umfasst, insbesondere eine dreidimensional-strukturierte Ebene.

17. Kit zur Charakterisierung von Lumineszenzmesssystemen umfassend zumindest eine Grundplatte (12), die zumindest eine auf der Grundplatte (12) angeordnete Fokussiereinrichtung (20) mit einer hochebenen, reflektierenden und/oder lumineszierenden Fokussierfläche (22) zur Einstellung eines definierten Messstrahlfokus des zu kalibrierenden Lumineszenzmesssystems aufweist, welche eine Rauheit unterhalb der optischen Auflösung des zu kalibrierenden Lumineszenzmesssystems aufweist, sowie ein Set unterschiedlicher, auf der Grundplatte (12) anordenbarer Kalibriermodule (22) mit verschiedenen Kalibrier- und/oder Charakterisierungsfunktionen, wobei die Fokussierfläche (22) in einer Ebene mit einer Oberfläche des mindestens einen, auf der Grundplatte (12) angeordneten Kalibriermoduls (24) angeordnet ist, wobei der Set weiter ein Kalibriermodul (30) zur Bestimmung der Ortsauflösung in x,y- und z-Richtung umfassend eine reflektierende und/oder fluoreszierende schiefe Ebene umfasst, die Grundplatte (12) Aufnahmen (18) für das zumindest eine, die Kalibrier- und/ oder Charakterisierungsfunktion aufweisende, Kalibriermodul (24) und das Kalibriermodul (30) zur Bestimmung der Ortsauflösung in x-, y- und z-Richtung umfasst, sodass die multifunktionelle Kalibriereinrichtung (10) individuellen Erfordernissen entsprechend gestaltbar ist .

18. Verwendung einer Kalibriereinrichtung (10) nach einem der Ansprüche 1 bis 16 oder eines Kits nach Anspruch 17 zur Ermittlung der spektralen Empfindlichkeit und/oder der Linearität und/oder des Dynamikbereichs eines Detektionssystems eines Lumineszenzmesssystems und/oder zur Ermittlung der Ausleuchtungshomogenität eines Lumineszenzmesssystems und/oder zur Bestimmung der Ortsauflösung in x,y- und z-Richtung.

19. Verwendung einer Kalibriereinrichtung (10) nach einem der Ansprüche 1 bis 16 oder eines Kits nach Anspruch 17 zur Ermittlung der Anregungslichtintensität eines Lumineszenzmesssystems und/oder zur Bestimmung der Ortsauflösung in x,y- und z-Richtung.

20. Verwendung einer Kalibriereinrichtung (10) nach einem der Ansprüche 1 bis 16 oder eines Kits nach Anspruch 17 zur Ermittlung der Unterdrückung der Anregungswellenlänge im Emissionskanal eines Photolumineszenzmesssystems und/oder zur Bestimmung der Ortsauflösung in x,y- und z-Richtung.

## Claims

1. A multifunctional calibration device (10) for characterizing luminescence measurement systems, and in particular spectrally resolving, wide-field and/or confocal imaging systems, comprising:
(a) a baseplate (12);
(b) at least one calibration module (24), which is arranged on the baseplate (12) and includes at least one calibration and/or characterization function;
(c) at least one focusing device (20), which is arranged on the baseplate (12) and comprises a highly planar, reflective and/or luminescent focusing surface (22) for setting a defined measuring beam focus of the luminescence measurement systems to be calibrated, the focusing surface (22) being arranged in one plane with a surface of the at least one calibration module (24) and having a roughness below the optical resolution of the luminescence measurement system to be calibrated; and
(d) a calibration module (30) for determining the spatial resolution in the x, y and z directions, comprising a reflective and/or fluorescent inclined plane,
the baseplate (12) comprising receptacles (18) for the at least one calibration module (24) including the calibration and/or characterization function and the calibration module (30) for determining the spatial resolution in the x, y and z directions, so that the multifunctional calibration device (10) can be designed in keeping with individual requirements.

2. The calibration device (10) according to claim 1,
**characterized in that**
at least two focusing devices (20) arranged on the baseplate (12) are provided, which are arranged, in particular, on mutually opposing boundary regions of the baseplate (12).

3. The calibration device (10) according to claim 1 or 2,
**characterized in that**
the at least one focusing device (20) is a substrate coated with a reflective metal layer, and in particular, a chromium sputtered silicon wafer.

4. The calibration device (10) according to any one of the preceding claims,
**characterized in that**
the calibration device (10) comprises at least one further focusing device (20), which is arranged on the baseplate (12) and comprises a highly planar, luminescent focusing surface (22) for setting a defined measuring beam focus of the luminescence measurement systems to be calibrated, which is arranged in one plane with the at least one calibration module (24) and has a roughness below the optical resolution of the luminescence measurement system to be calibrated.

5. The calibration device (10) according to the preceding claim 4,
**characterized in that**
the at least one further focusing device (20) is a substrate coated with a luminescent material, and in particular, a wafer sputtered with a fluorescent material, and preferably with quantum dots.

6. The calibration device (10) according to any one of the preceding claims,
**characterized in that**
the at least one calibration module (24) can be releasably connected to the baseplate (12), and, in particular, can be releasably inserted into a receptacle (18) of the baseplate (12).

7. The calibration device (10) according to any one of the preceding claims,
**characterized in that**
a plurality of calibration modules (24) having different functions are arranged on the baseplate (12).

8. The calibration device (10) according to any one of the preceding claims,
**characterized in that**
the at least one calibration module (24) is a module for ascertaining the spectral sensitivity, the wavelength accuracy, the linearity and/or the dynamic range of a detection system and/or for ascertaining the illumination homogeneity of the light source of the luminescence measurement system.

9. The calibration device (10) according to claim 8,
**characterized in that**
the at least one calibration module (24) is a material comprising at least one fluorophore, and in particular, a fluorophore-doped optically transparent material.

10. The calibration device (10) according to either claim 8 to 9,
**characterized in that**
at least one fluorophore is at least one metal ion, selected from the group of the rare earth metals, and in particular, the lanthanides, or a mixture thereof.

11. The calibration device (10) according to any one of claims 8 to 10,
**characterized in that**
the at least one fluorophore is at least one metal ion, selected from the group of the transition metals, and in particular, cobalt, chromium and manganese.

12. The calibration device (10) according to any one of claims 8 to 10,
**characterized in that**
the fluorophore is selected from the group of fluorescent organic compounds, quantum dots or florescent nanocrystals.

13. The calibration device (10) according to any one of claims 9 to 12,
**characterized in that**
the optically transparent material is a glass, a glass-ceramic or a plastic, and in particular, a lanthanum phosphate glass, a fluorophosphate glass, a fluor crown glass, a lanthanum glass, a glass ceramic formed of these glasses, or a lithium aluminum silicate glass-ceramic.

14. The calibration device (10) according to any one of the preceding claims,
**characterized in that**
the at least one calibration module (24) comprises a module for ascertaining the excitation light intensity, and in particular, a scatterer or a glass matrix or plastic matrix doped with a bleachable fluorophore having known bleaching kinetics.

15. The calibration device (10) according to any one of the preceding claims,
**characterized in that**
the at least one calibration module (24) comprises a module for ascertaining the suppression of the excitation wavelength in the emission channel of the luminescence measurement system, and in particular, a scatterer.

16. The calibration device (10) according to any one of the preceding claims,
**characterized in that**
the at least one calibration module (24) comprises a module for ascertaining the spatial resolution in the x, y and/or z directions, and in particular, a three-dimensionally structured plane.

17. A kit for characterizing luminescence measurement systems, comprising at least one baseplate (12), which comprises a focusing device (20) arranged on the baseplate (12) and comprising a highly planar, reflective and/or luminescent focusing surface (22) for setting a defined measuring beam focus of the luminescence measurement systems to be calibrated, which has a roughness below the optical resolution of the luminescence measurement system to be calibrated, and a set of different calibration modules (22), which can be arranged on the baseplate (12) and include different calibration and/or characterization functions, the focusing surface (22) being arranged in one plane with a surface of the at least one calibration module (24) arranged on the baseplate (12), the set furthermore comprising a calibration module (30) for determining the spatial resolution in the x, y and z directions, comprising a reflective and/or fluorescent inclined plane, the baseplate (12) comprising receptacles (18) for the at least one calibration module (24) including the calibration and/or characterization function, and the calibration module (30) for determining the spatial resolution in the x, y and z directions, so that the multifunctional calibration device (10) can be designed in keeping with individual requirements.

18. Use of a calibration device (10) according to any one of claims 1 to 16, or of a kit according to claim 17 for ascertaining the spectral sensitivity and/or the linearity and/or the dynamic range of a detection system of a luminescence measurement system and/or for ascertaining the illumination homogeneity of a luminescence measurement system and/or for determining the spatial resolution in the x, y and z directions.

19. Use of a calibration device (10) according to any one of claims 1 to 16, or of a kit according to claim 17 for ascertaining the excitation light intensity of a luminescence measurement system and/or for determining the spatial resolution in the x, y and z directions.

20. Use of a calibration device (10) according to any one of claims 1 to 16, or of a kit according to claim 17 for ascertaining the suppression of the excitation wavelength in the emission channel of the photo luminescence measurement system and/or for determining the spatial resolution in the x, y and z directions.

## Revendications

1. Dispositif d'étalonnage multifonctionnel (10) pour la caractérisation de systèmes de mesure de luminescence, en particulier de systèmes d'imagerie à résolution spectrale, grand champ et/ou confocaux, comprenant
(a) une plaque de base (12),
(b) au moins un module d'étalonnage (24), présentant au moins une fonction d'étalonnage et/ou une fonction de caractérisation, disposé sur la plaque de base (12) et
(c) au moins un dispositif de focalisation (20) disposé sur la plaque de base (12), avec une surface de focalisation (22) à plan élevé, réfléchissant et/ou luminescente, pour le réglage d'un foyer de faisceau de mesure défini du système de mesure de luminescence à étalonner, la surface de focalisation (22) étant disposée dans un plan avec une surface de l'au moins un module d'étalonnage (24) et présentant une rugosité inférieure à la résolution optique du système de mesure de luminescence à étalonner, et
(d) un module d'étalonnage (30) configuré pour déterminer la résolution spatiale dans la direction x, y et z, comprenant un plan incliné réfléchissant et/ou fluorescent,
la plaque de base (12) comprenant des logements (18) pour l'au moins un module d'étalonnage (24) présentant la fonction d'étalonnage et/ou la fonction de caractérisation et le module d'étalonnage (30) configuré pour déterminer la résolution spatiale dans la direction x, y et z, de façon à ce que le dispositif d'étalonnage multifonctionnel (10) puisse être conçu en fonction de besoins individuels.

2. Dispositif d'étalonnage (10) selon la revendication 1,
**caractérisé en ce que**
au moins deux dispositifs de focalisation (20), disposés sur la plaque de base (12), sont prévus, qui sont disposés en particulier au niveau de bords opposés de la plaque de base (12).

3. Dispositif d'étalonnage (10) selon la revendication 1 ou 2,
**caractérisé en ce que**
l'au moins un dispositif de focalisation (20) est un substrat revêtu d'une couche de métal réfléchissante, en particulier une plaquette de silicium pulvérisée au chrome.

4. Dispositif d'étalonnage (10) selon l'une des revendications précédentes,
**caractérisé en ce que**
le dispositif d'étalonnage (10) comprend au moins un autre dispositif de focalisation (20) disposé sur la plaque de base (12), avec une surface de focalisation (22) à plan élevé luminescente, pour le réglage d'un foyer de faisceau de mesure défini du système de mesure de luminescence à étalonner, qui est disposé dans un plan avec l'au moins un module d'étalonnage (24) et présente une rugosité inférieure à la résolution optique du système de mesure de luminescence à étalonner.

5. Dispositif d'étalonnage (10) selon la revendication précédente 4,
**caractérisé en ce que**
l'au moins un autre dispositif de focalisation (20) est un substrat revêtu d'un matériau luminescent, plus particulièrement une tranche pulvérisée avec un matériau fluorescent, de préférence avec des points quantiques.

6. Dispositif d'étalonnage (10) selon l'une des revendications précédentes,
**caractérisé en ce que**
l'au moins un module d'étalonnage (24) peut être relié de manière amovible avec la plaque de base (12), en particulier peut être inséré de manière amovible dans un logement (18) de la plaque de base (12).

7. Dispositif d'étalonnage (10) selon l'une des revendications précédentes,
**caractérisé en ce que**
une pluralité de modules d'étalonnage (24) de différentes fonctions, disposés sur la plaque de base (12), sont prévus.

8. Dispositif d'étalonnage (10) selon l'une des revendications précédentes,
**caractérisé en ce que**
l'au moins un module d'étalonnage (24) comprend un module configuré pour déterminer la sensibilité spectrale, la précision de longueur d'onde, la linéarité et/ou de la plage dynamique d'un système de détection et/ou pour déterminer l'homogénéité d'illumination de source lumineuse du système de mesure de luminescence.

9. Dispositif d'étalonnage (10) selon la revendication 8,
**caractérisé en ce que**
l'au moins un module d'étalonnage (24) est un matériau contenant au moins un fluorophore, en particulier un matériau optiquement transparent dopé avec un fluorophore.

10. Dispositif d'étalonnage (10) selon l'une des revendications 8 ou 9,
**caractérisé en ce que**
au moins un fluorophore est au moins un ion métallique sélectionné dans le groupe des terres rares, en particulier des lanthanides, ou un mélange de ceux-ci.

11. Dispositif d'étalonnage (10) selon l'une des revendications 8 à 10,
**caractérisé en ce que**
l'au moins un fluorophore est au moins un ion métallique sélectionné dans le groupe des métaux de transition, plus particulièrement le cobalt, le chrome et le manganèse.

12. Dispositif d'étalonnage (10) selon l'une des revendications 8 à 10,
**caractérisé en ce que**
le fluorophore est sélectionné dans le groupe des composés organiques fluorescents, des points quantiques ou des nanocristaux fluorescents.

13. Dispositif d'étalonnage (10) selon l'une des revendications 9 à 12,
**caractérisé en ce que**
le matériau optiquement transparent est un verre, une céramique vitreuse ou une matière plastique, plus particulièrement un verre au phosphate de lanthane, un verre fluorophosphate, un verre à couronne fluorée, un verre lanthane, une vitrocéramique constituée de ceux-ci ou une vitrocéramique aluminosilicate de lithium.

14. Dispositif d'étalonnage (10) selon l'une des revendications précédentes,
**caractérisé en ce que**
l'au moins un module d'étalonnage (24) comprend un module configuré pour déterminer l'intensité lumineuse d'excitation, en particulier un diffuseur ou une matrice de verre ou de matière plastique dopée avec un fluorophore blanchissable de cinétique de blanchissement connue.

15. Dispositif d'étalonnage (10) selon l'une des revendications précédentes,
**caractérisé en ce que**
l'au moins un module d'étalonnage (24) comprend un module configuré pour déterminer l'inhibition de la longueur d'excitation dans le canal d'émission du système de mesure de luminescence, en particulier un diffuseur.

16. Dispositif d'étalonnage (10) selon l'une des revendications précédentes,
**caractérisé en ce que**
l'au moins un module d'étalonnage (24) comprend un module configuré pour déterminer la résolution spatiale dans la direction x, y et/ou z, en particulier un plan structuré en trois dimensions.

17. Kit de caractérisation de systèmes de mesure de luminescence comprenant au moins une plaque de base (12), qui comprend au moins un dispositif de focalisation (20) disposé sur la plaque de base (12), avec une surface de focalisation (22) à plan élevé, réfléchissante et/ou luminescente pour le réglage d'un foyer de faisceau de mesure défini du système de mesure de luminescence à étalonner, qui présente une rugosité inférieure à la résolution optique du système de mesure de luminescence à étalonner et un ensemble de différents modules d'étalonnage (22) pouvant être disposés sur la plaque de base (12) et présentant différentes fonctions d'étalonnage et/ou de caractérisation, la surface de focalisation (22) étant disposée dans un plan avec une surface supérieure de l'au moins un module d'étalonnage (24) disposé sur la plaque de base (12), l'ensemble comprenant en outre un module d'étalonnage (30) configuré pour déterminer la résolution spatiale dans la direction x, y et z, présentant un plan incliné réfléchissant et/ou fluorescent, la plaque de base (12) comprenant des logements (18) pour l'au moins un module d'étalonnage (24) présentant les fonctions d'étalonnage et/ou de caractérisation et comprenant le module d'étalonnage (30) configuré pour déterminer la résolution spatiale dans la direction x, y et z, afin que le dispositif d'étalonnage multifonctionnel (10) puisse être conçu en fonction de besoins individuels.

18. Utilisation d'un dispositif d'étalonnage (10) selon l'une des revendications 1 à 16 ou d'un kit selon la revendication 17 pour la détermination de la sensibilité spectrale et/ou de la linéarité et/ou de la plage dynamique d'un système de détection d'un système de mesure de luminescence et/ou pour la détermination de l'homogénéité d'illumination d'un système de mesure de luminescence et/ou pour la détermination de la résolution spatiale dans la direction x, y et z.

19. Utilisation d'un dispositif d'étalonnage (10) selon l'une des revendications 1 à 16 ou d'un kit selon la revendication 17 pour la détermination de l'intensité lumineuse d'excitation d'un système de mesure de luminescence et/ou pour la détermination de la résolution spatiale dans la direction x, y et z.

20. Utilisation d'un dispositif d'étalonnage (10) selon l'une des revendications 1 à 16 ou d'un kit selon la revendication 17 pour la détermination de l'inhibition de la longueur d'onde d'excitation dans le canal d'émission d'un système de mesure de photoluminescence et/ou pour la détermination de la résolution spatiale dans la direction x, y et z.
